Europäisches Patentamt

European Patent Office

Office européen des brevets

(11) Publication number: **0 365 279**
**A2**

## EUROPEAN PATENT APPLICATION

(21) Application number: **89310651.8**

(22) Date of filing: **17.10.89**

(51) Int. Cl.⁵: **A01N 25/24**

(30) Priority: **18.10.88 GB 8824320**

(43) Date of publication of application:
**25.04.90 Bulletin 90/17**

(84) Designated Contracting States:
**BE DE ES FR GB GR IT NL SE**

(71) Applicant: **ALLIED COLLOIDS LIMITED**
**P.O. Box 38 Low Moor**
**Bradford West Yorkshire, BD12 0JZ(GB)**

(72) Inventor: **Chamberlain, Peter**
**40 Moorhead Lane**
**Shipley West Yorkshire(GB)**
Inventor: **Langley, John Graham**
**4 Wharfedale Gardens**
**Baildon West Yorkshire(GB)**

(74) Representative: **Lawrence, Peter Robin**
**Broughton et al**
**GILL JENNINGS & EVERY 53-64 Chancery**
**Lane**
**London WC2A 1HN(GB)**

(54) **Agricultural compositions.**

(57) An agricultural aqueous sprayable composition, or a concentrate from which it is formulated, includes agriculturally useful active ingredient such as growth promoter or pesticide, wetter surfactant that promotes wetting of the plant leaves or soil and a cationic polymeric material that is water soluble or water dispersible.

EP 0 365 279 A2

## Agricultural Compositions

Agricultural compositions are applied to the soil or plants generally either as powders (for instance granules) or as aqueous sprays. The aqueous sprays are always very dilute and normally include a wetter surfactant to promote wetting of the leaves by the spray. Conventionally the sprayable composition is obtained by dilution of a concentrate with water. The concentrate normally also includes the wetter surfactant. The concentrate that is diluted to make the sprayable composition may be the concentrate as originally supplied by a manufacturer or, more usually, a tank mix obtained by dilution of such a concentrate.

Most agricultural active ingredients are insoluble in water and so have to be present as dispersions in the final composition, and so it is necessary to include one or more dispersants. Although some non-ionic surface active materials can be used, the compositions normally have a substantial anionic content and the particles of active ingredient may be anionic. Typically therefore the zeta potential of the composition is a relatively high negative figure, e.g., -25mV.

Even though it is relatively easy to formulate the sprayable composition such that it wets the leaves satisfactorily, the active ingredient often does not adhere well to the plants or soil surfaces to which it is initially applied and may easily be washed away from the chosen surfaces by, for instance, rain.

There have been numerous proposals for trapping the active ingredient within a polymeric matrix (for instance within polymeric emulsion particles) that is incorporated in the composition that is to be applied by, e.g., spraying. The intention is that the active ingredient will be released only slowly from the matrix. The polymer is usually insoluble in water. Although these proposals can prolong the availability of the active ingredient, they suffer from the disadvantage that they usually require special formulation techniques to incorporate the active ingredient in the polymeric matrix that is to be put into the concentrate. For instance it is known to diffuse the active ingredient into the polymer, and to form the polymer in the presence of the active ingredient. These techniques are generally unsuitable for manufacturers who are equipped only with conventional apparatus for making agricultural concentrates. It would be desirable if rain-resistance could be achieved merely by incorporating one or more simple additives in conventional manner into a composition that is made using materials and techniques that are otherwise conventional.

In AU 40409/64 and 61769/65 processes are described for improving the adhesion of agricultural powder compositions to leaves. In AU 40409/64 the powder particles are coated with an adhesive oil. In AU 61769/65, the powder particles are coated with a thin layer of materials that are described as cationic amphiphilic compounds having very low solubility, or being insoluble in water. In practice the described materials are insoluble and have a hydrophobic portion and a cationic hydrophilic portion. Although the hydrophilic portion could be derived from a polyamine, the materials were always monomeric. It was speculated that the hydrophobic portion attached itself to the waxy coating on the leaves whilst the ionic portion associated with the ionic components of the inorganic filler particles in the powder. However these two methods suffer from the inevitable risk that the coating will tend to render the powder sticky and non-sprayable and, in any event, the methods are inapplicable to systems where the active ingredient is to be applied as an aqueous sprayable composition.

According to the present invention we provide an agricultural composition that is selected from (a) aqueous sprayable compositions that include a wetter surfactant and (b) concentrates that are formulated to form the aqueous sprayable compositions upon dilution, and the composition includes an agriculturally useful active ingredient and a polymeric material and is characterised in that the polymeric material comprises a water-soluble or water-dispersible cationic polymer that promotes binding of the active ingredient to plant leaves or soil.

The sprayable composition contains a wetter surfactant in order to promote wetting of plant leaves or soil by the aqueous spray. Plant leaves and soil are both usually anionically charged and so the incorporation of the cationic polymer tends to improve the substantivity to the leaves and soil of the resultant film or particles of sprayed composition.

The wetter surfactant may be anionic, provided that this does not produce incompatibility within the composition, or cationic, but is generally a non-ionic surfactant, for instance any of the non-ionic wetter surfactants conventionally used in sprayable agricultural compositions.

The sprayable composition can be made by adding the cationic polymer and/or wetter surfactant to a pre-formed aqueous sprayable composition, or to a tank mix, or to the concentrate from which a tank mix can be made. For instance a concentrate an be converted to a sprayable composition by dilution with water containing the surfactant and polymer. Preferably the concentrate contains the surfactant and polymer so that the sprayable composition can be made merely by dilution with water. Thus it is generally preferred to include the polymer during the initial manufacture of the concentrate from the active ingredient and the surfactant and other carrier additives. By this means it is possible to obtain optimum interaction between the cationic polymer and the active ingredient and to minimise or avoid any other components in the composition. Wetter surfactant can be added during dilution of the concentrate.

The active ingredient can be in solution in the sprayable composition but is usually present as emulsified or dispersed particles and so the cationic polymer should not cause flocculation of particles containing the active ingredient, since the resultant composition would not then be a sprayable composition. Flocculation is avoided by appropriate selection of polymer molecular weight and by avoiding the inclusion of anionic components of the composition, that would interact to cause flocculation.

The mechanism by which the cationic polymer promotes binding of the active ingredient to plant leaves or soil particles depends in part upon the active ingredient and the polymer. In some instances the polymer, upon drying of the aqueous spray droplets or a film formed from them, may merely form a polymeric matrix which is electrostatically bound to the leaves or soil and throughout which the active ingredient is distributed. Generally however the active ingredient is chemically associated with the polymer, for instance as a complex, or physically associated with the polymer, for instance as a result of particles containing the active ingredient being coated by the polymer, and the remaining cationic sites on the polymer promote bonding on to the leaves or soil.

One function of the cationic polymer is to impart a cationic charge to suspended particles that are in the composition that is to be sprayed, or to the spray droplets, and usually both. Some of this cationic charge can be due to non-polymeric cationic material, for instance a cationic wetter surfactant or a cationic dispersant surfactant. For instance it is possible to use one of the conventional monomeric surfactants that have a cationic charge and that can be used as wetters or dispersants. The use of these surfactants by themselves, in the absence of the cationic polymer, is not satisfactory since a monomeric surfactant is much less able to provide useful bonding than is a cationic polymer. For instance a cationic polymer can provide a much higher charge density than can a surfactant. A cationic surfactant generally only has one site or, at the most, two or three cationic sites whereas a cationic polymer will generally have a large number, for instance above 10 and usually above 100, cationic sites. The binding in the invention can involve an equilibrium reaction of adsorption and desorption and so it is necessary to have a large number of available sites so as to ensure that there are adsorbed sites even when some of the sites are desorbed. Also the cationic polymers are able to complex with the active ingredient and/or adsorb on to the active ingredient while still leaving a large number of cationic charges available for attraction to the anionic sites of the leaves or soil particles.

A further advantage of the cationic polymers (especially those having relatively high molecular weights, for instance above 500,000 and often above 1 million) is that they can improve the properties of the concentrate and/or the sprayable composition. For instance the polymer can improve the stability of a dispersion and/or, in particular, can provide antidrift properties, i.e., it can reduce drift during spray application of the diluted composition.

In some instances, for instance when the polymer is a relatively high molecular weight polymer, the cationic polymer can be amphoteric in that it includes anionic monomer units in a minor amount relative to the amount of cationic monomer units. Usually however the cationic polymer is substantially free of anionic units. The optimum cationic polymer for any particular purpose depends upon the nature of the active ingredient and the mechanism by which the cationic polymer is to exert its effect. If the cationic polymer is to serve primarily as a cationic dispersing agent then it should be of relatively low molecular weight and will have a charge density that is frequently as high as possible. If the cationic polymer is to absorb on to predispersed particles or is to provide a cationic charge to emulsion droplets or to the spray particles then a higher molecular weight and a lower charge density may be appropriate.

The cationic polymer can be selected from water soluble naturally occurring polymers (including modified naturally occurring polymers) and synthetic polymers. Suitable naturally occurring polymers include chitosan, cationic starch or other cationic polysaccharide. Preferably however the cationic polymer is a water-soluble or water-dispersible synthetic polymer and may be made by copolymerising one or more ethylenically unsaturated monomers, generally acrylic monomers, that consist of or include cationic monomer. The monomer or monomer blend is usually water soluble, so as to ensure that the polymer is either soluble or highly swellable in water (e.g., the polymer will absorb at least 20 times and often at least 80 times its own dry weight of water).

Suitable cationic monomers are dialkyl amino alkyl-(meth) acrylates or -(meth) acrylamides, either as acid salts or, preferably, quaternary ammonium salts. The alkyl groups may each contain 1 to 4 carbon atoms and the aminoalkyl group may contain 1 to 8 carbon atoms. Particularly preferred are dialkylaminoethyl (meth) acrylates, dialkylaminoethyl (meth) acrylamides and dialkylamino-1,3-propyl (meth) acrylamides. These cationic monomers may be homopolymerised or copolymerised with each other or with a non-ionic monomer, preferably (meth) acrylamide. Another suitable monomer, often copolymerised with acrylamide or homopolymerised, is diallyldimethyl ammonium chloride or other diallyl dialkyl ammonium salt. The usual cationic polymers are formed from 5 to 100% cationic monomer with the balance being non-ionic. The amount of cationic monomer is usually at least 10% and often at least 20% by weight. When the polymer is to act as a dispersant the amount of cationic monomer can be up to 100%, typically 50 to 100%. When the cationic polymer is present for other purposes the amount of cationic monomer can again be up to 100% but often is less, for instance below 70% and often below 50% (but above 10%) by weight of total monomers.

Other suitable cationic polymers are polyethylene imines and polyamines, e.g., polyamine epichlorhydrin polymers, especially for use as cationic dispersants.

When the cationic polymer is to serve as a dispersant, it will have a relatively low molecular weight that is normally well below 500,000 and usually below 100,000, frequently below 50,000. The molecular weight is usually at least 1,000 and preferably is above 5,000.

When the polymer is to be present for other purposes its molecular weight can be higher, for instance above 500,000 and often 1 million or more, for instance up to 10 million or more, generally between about 800,000 and 5 million.

The cationic polymer must be sufficiently soluble or dispersible that the diluted aqueous composition can be sprayed without blockages of the spray nozzles due to insoluble polymer gel particles. The polymer must also provide the desired binding of the active ingredient to the leaves or soil. Accordingly the polymers are preferably linear homopolymers or copolymers of water soluble monomers. However, cationic polymers which have a small degree of cross linking or branching, or that are formed from monomers that include a small proportion of insoluble monomer, can also be soluble. It is also possible to use cationic polymers that are insoluble but dispersible, often being swellable in water. Dispersible polymer must be present in the form of particles that are sufficiently small to be readily dispersible, generally below 10μm, usually below 3μm. The polymer is best made by reverse phase polymerisation, generally of water soluble monomer in the presence of cross linking agent, optionally followed by azeotropic drying. It can be convenient to supply this dispersion separately and incorporate it during the dilution of the concentrate.

The active ingredient can be water soluble in which event the concentrate can be a concentrated aqueous solution or, more usually, a particulate material, typically a soluble grain that contains solid active ingredient and additional water soluble materials that dissolve to release the active ingredient into solution. In these instances the cationic polymer may be introduced with the other ingredients during the formation of the dry particulate material. For instance it may be introduced as an aqueous solution or in dry form, generally during granulation. The active ingredient is preferably sufficiently anionic that, upon dissolving the polymer into water in the presence of the active ingredient, a water soluble cationic complex is formed, thereby promoting adhesion on to the anionically charged leaf surfaces or soil particles.

Often the active ingredient is insoluble in water and the concentrate typically then is a dry particulate material formulated for dispersion into water, an emulsifiable concentrate or, preferably, an aqueous dispersion.

The particulate material may be a wettable powder but preferably it is a granular material, for instance a dispersable grain. The polymeric material may be incorporated in dry form, for instance by mixing a reverse phase composition with the other ingredients during granulation or by adding it as an aqueous solution or as a powder, during granulation. The cationic polymer may be a low molecular weight cationic dispersing agent, in which event it is preferably absorbed on to the particles during the preparation of the concentrate, or it may be a higher molecular weight cationic polymer. Naturally it is necessary to ensure that any high molecular weight cationic polymer does not cause flocculation as a result of, for instance, excessive adsorption on to particles due to the presence of an anionic dispersing agent.

An emulsifiable concentrate according to the invention comprises a solution of active ingredient in organic solvent with emulsifier and wetter. Although the polymer can be incorporated in various forms, it is particularly preferred to introduce the polymer as a reverse phase dispersion of the polymer in organic solvent. The polymer particles typically have a size below 3μm. The reverse phase dispersion may be made by conventional reverse phase polymerisation techniques, optionally followed by azeotropic distillation. The oil in water emulsifier that is present to promote distribution of the solution, and of the polymer, into the dilution water should be selected so that it is not incompatible with the cationic polymer. Some anionic emulsifiers may be usable but it is generally preferred to use a non-ionic or cationic emulsifier. The overall effect of the choice of emulsifier and cationic polymer should be such that the sprayable composition that is obtained by dispersing the concentrate into water will have a cationic charge and, in particular, the sprayed particles will have a cationic charge.

Particularly preferred compositions of the invention are aqueous dispersions, preferably of the type that is conventionally referred to as a flowable.

The composition can be made by incorporating a cationic polymeric dispersant into a conventional flowable formulation in which the active ingredient is micronised in an aqueous medium, or into other suitable aqueous dispersion . The polymeric dispersant can be additional to the normal anionic dispersants such as naphthalene sulphonic acid or sodium lignosulphonate but is preferably used in place of the conventional anionic dispersants.

Further improvement can be achieved by including also a second, higher molecular weight, cationic polymer since this can serve to increase the cationic character of the active ingredient (as determined by zeta potential measurements) and can improve the physical stability of the sprayable composition by thickening the aqueous phase and can reduce drift during spray application.

The combination of a cationic polymeric dispersant and a cationic high molecular weight polymer is particularly advantageous when the active ingredient is present in the sprayable composition as dispersed particles since the dispersant adsorbs on to the active ingredient particles and renders them cationic and the second cationic polymer then improves the properties further. If the dispersed particles were anionic in character then there would be a risk of flocculation due to the presence of the high molecular weight cationic polymer. However, in a modification, it is possible to disperse the particles using, for instance, a cationic monomeric dispersant surfactant instead of the cationic polymer, but this is generally less preferable. In another modification, the high molecular weight cationic polymer can be replaced by a substantially non-ionic polymer. Highly anionic high molecular weight polymers should be avoided since otherwise they may cause flocculation.

The overall formulation of the composition should be such that it has a positive zeta potential. This is usually at least +5mV and preferably is at least +10mV. Usually it is unnecessary for it to be above +40mV. These values preferably apply both to the aqeuous sprayable composition and, for instance, to the tank mix or other aqueous concentrate.

The quantity of cationic polymer is dependent upon the particular composition and polymer type but is generally between 0.1% and 25% based on the weight of active ingredient. When the polymer is a higher molecular weight polymer the amount is typically below 5% and preferably below 2%, but generally above 0.5% based on the weight of active ingredient in the concentrate. When the polymer is present as a dispersant (and is therefore of lower molecular weight) the amount is usually at least 1% and preferably at least 5%, but is generally below 20%, based on the weight of active ingredient.

The agriculturally useful active ingredient may be a growth promoter such as a foliar feed that can be a nutrient or a trace metal chelate, or a pesticide such as a pre-emergence herbicide or post-emergence herbicide, or an insecticide, fungicide, nematicide, acaricide or any other pesticidally active compound.

The active ingredient can be a chemically synthesised or naturally occurring ingredient or it can be an active ingredient made by fermentation. Suitable active ingredients of this general type, and combinations of them with other active ingredients, are described in Chemical Abstracts Volume 92, 1980, 158911g and 175716q and Volume 93, 1980, 91573y, and the literature referred to in these.

As is well known, the desired product from a fermentation broth is generally extracted from the broth either by concentration by conventional concentration techniques such as ultrafiltration or by spray drying or by ultrafiltration followed by spray drying and any of the conventional ways of providing an agriculturally useful form of the biologically active material can be used. Particular techniques are described in Chemical Abstracts Volume 89, 1978, 17011d and 58339w and in Volume 90, 17467p, and in the literature references referred to in those. Thus after forming a concentrate by conventional ultrafiltration or spray drying, an agricultural composition may be formed by adding thinners or other viscosity modifiers and appropriate wetting agents and other surface active agents.

The invention is of particular value when the active ingredient is Bacillus Thuringiensis (BT). BT is a well known dead cellular toxic material for the control of caterpillars and insects by acting in their alkaline digestive system. Its properties and extraction techniques are described in the literature quoted above.

The invention is further illustrated by way of the following examples.

Example 1

An emulsifiable concentrate herbicide formulation was prepared by dissolving an active component (Pentanochlor) in an organic solvent (Isophorone/Aranasol H) to obtain 40g of a 50% solution. A wetting system was added to achieve good emulsification and spreading of the spray material and to enhance efficacy.

The wetting system consisted of 10g of non-ionic wetter (Ethylan BV). This control sample was labelled A.

2.5g of a copolymer of 30% dimethyl amino ethyl acrylate quaternised with methyl chloride and 70% acrylamide in the form of a reverse phase dispersion in 2.5g organic solvent was added to sample A. The cationic polymer molecular weight was 1 million. This sample prepared according to the invention was labelled B.

Example 2

A growing room trial was carried out to compare the efficacy of samples A and B as in Example 1.

Chickweed was grown from seed in a controlled environment. Trays of chickweed were treated at the 2/3 true leaf stage with various dose levels of active herbicide. The % kill was assessed after 3 days.

The results are tabulated below:

| Treatment Level | % Kill | |
|---|---|---|
| kg/hectare A.I. | Sample A | Sample B |
| 2.5 | 40% | 70% |
| 1.9 | 30% | 40% |
| 1.25 | 25% | 35% |
| 0.85 | 10% | 10% |

This shows that Sample B, according to the invention, has improved efficacy relative to the control, Sample A.

Example 3

A water soluble grain according to the invention is prepared by dry-milling 4 parts of the active ingredient (Ioxynil/Bromoxynil grain) to about $5\mu m$ and mixing with a conventional wetter-binder additive. This acts as a wetter-dispersant when wet, but a binder when dry. Additionally, the additive includes 4 parts of powdered cationic polyacrylamide formed from 50% dimethyl amino ethyl acrylate quaternised with methyl chloride and 50% acrylamide with a molecular weight of 1 million.

The milled active, binder/dispersant and filler are wetted to a paste, and then agglomerated by extrusion. The product is a dust free material which is mixed with 1000 parts water for application by spray.

Example 4

A concentrate was obtained from a fermentation froth containing 15% active B.T.

To 60g of this fermentation froth, 3g of a 30% active poly diallyl dimethyl ammonium chloride solution with a molecular weight of 10,000 was added. 15g of a 2% aqueous solution of a high molecular weight cationic polymer was added to the above mix. The cationic polymer was 70% acrylamide, 30% dimethyl amino ethyl acrylate quaternised with methyl chloride and the molecular weight was 1 million.

A smooth stable formulation with a zeta potential of +40 millivolts was obtained.

Claims

1. An agricultural composition selected from (a) aqueous sprayable compositions that include a wetter surfactant and (b) concentrates that are formulated to form the aqueous sprayable compositions upon dilution, and which includes an agriculturally useful active ingredient and a polymeric material, characterised in that the polymeric material comprises a water-soluble or water-dispersible cationic polymer that promotes binding of the active ingredient to plant leaves or soil.

2. A composition according to claim 1 in which the cationic polymer is selected from water-soluble naturally occurring cationic polymers and water-soluble or water-dispersible synthetic polymers formed by polymerisation of a water-soluble monomer or monomer blend wherein the monomer or monomer blend comprises at least 10% by weight cationic monomer and the or each monomer is ethylenically unsaturated.

3. A composition according to claim 1 in which the cationic polymer is introduced as a dispersion of polymer particles having a size below 3μm made by reverse phase polymerisation of 10 to 100% by weight water-soluble, cationic, ethylenically unsaturated monomer and 90 to 0% by weight other water-soluble ethylenically unsaturated monomer.

4. A composition according to any preceding claim in which the cationic polymer is a dispersant having molecular weight 1,000 to 100,000.

5. A composition according to any of claims 1 to 3 in which the cationic polymer has molecular weight above 500,000.

6. A composition according to any preceding claim that is a concentrate selected from soluble grains, dispersible grains, emulsifiable concentrates and aqueous dispersions.

7. A composition according to any of claims 1 to 5 that is an aqueous sprayable composition.

8. A composition according to any preceding claim in which the active ingredient is insoluble in water.

9. A composition according to any preceding claim in which the active ingredient is selected from agriculturally useful growth promoters and pesticides.

10. A composition according to any preceding claim in which the cationic polymer is soluble in water.

11. A method of applying an active ingredient to plant leaves or soil comprising spraying of the leaves or soil with an aqueous sprayable composition that includes a wetter surfactant, an agriculturally useful active ingredient and a polymeric material, characterised in that the polymeric material comprises a water-soluble or water-dispersible cationic polymer that promotes binding of the active ingredient to the plant leaves or soil.